# EUROPÄISCHE PATENTSCHRIFT

(11) **EP 0 483 636 B1**
(45) Veröffentlichungstag und Bekanntmachung des Hinweises auf die Patenterteilung: **11.08.1993**
(21) Anmeldenummer: 91117935.6
(22) Anmeldetag: 21.10.1991
(51) Int. Cl.: F16L 3/13, F16L 3/22

(54) **Halteelement aus Kunststoff**
Plastics retaining element
Elément de retenue en matière plastique

(30) Priorität: 30.10.1990 DE 4034546
(43) Veröffentlichungstag der Anmeldung: 06.05.1992
(73) Patentinhaber: TRW United-Carr GmbH & Co. KG, D-67677 Enkenbach-Alsenborn (DE)
(72) Erfinder: Rückwardt, Hans-Werner, W-6719 Eisenberg (DE)
(74) Vertreter: Schieschke, Klaus, Dipl.-Ing.

(56) Entgegenhaltungen:
- DE-A- 3 029 975
- DE-U- 8 529 669
- FR-A- 2 558 902

## Beschreibung

Die Erfindung bezieht sich auf ein Halteelement aus Kunststoff, mit mindestens einem neben einem Haltebereich angeordneten Lagerbereich zur Aufnahme mindestens eines rohrförmigen Teils.

Ein derartiges Halteelement zur Aufnahme von rohrförmigen Teilen, welches zwischen einem Haltebereich 2 schalenartige Lagerbereiche aufweist, ist bereits bekannt (DE-PS 30 02 031). Hierbei werden die rohrförmigen Teile in die schalenartigen Lagerbereiche eingeclippt, wobei das gesamte Halteelement beispielsweise auf einen Sägezahnbolzen aufgeschlagen wird, welcher auf einem Träger, beispielsweise einer Kraftfahrzeugkarosserie, befestigt ist. Wenn die rohrförmigen Teile Schwingungen unterworfen sind, kann sich bei dieser bekannten Konstruktion der Nachteil ergeben, daß sich diese Schwingungen in unerwünschter Weise auf den Träger, d.h. die Kraftfahrzeugkarosserie, übertragen.

Zum Stand der Technik zählt weiterhin ein dreiteiliges Halteelement, bei welchem ein schaumartiges Zwischenteil zwischen zwei starren Teilen eingebettet ist, wobei das schaumartige Zwischenteil die rohrförmigen Elemente haltert (US-PS 3 447 998). Auch hier liegen jedoch wiederum unmittelbar Berührungspunkte zwischen den rohrförmigen Teilen und dem starren Außenteil vor, so daß bei dieser bekannten Konstruktion ebenfalls in unerwünschter Weise Schwingungen übertragen werden können.

Bei einem weiteren bekannten Halteelement sind zwei weiche Innenschalen vorgesehen, welche die rohrförmigen Teile beaufschlagen, wobei diese beiden weichen Innenschalen innerhalb einer aus hartem Material bestehenden Außenschale angeordnet sind. Hier bestehen ebenfalls unmittelbare Berührungspunkte von den schwingenden rohrförmigen Teilen über die Innenschale zu der harten Außenschale.

Demgegenüber liegt der vorliegenden Erfindung die Aufgabe zugrunde, ein Halteelement für schwingende rohrförmige Teile zu schaffen, wobei gewährleistet sein soll, daß diese Schwingungen nicht auf den Träger, beispielsweise eine Kraftfahrzeugkarosserie, übertragen werden, sondern eine erhebliche Dämpfung erfahren.

Diese Aufgabe wird erfindungsgemäß gelöst durch dreiteilige Ausbildung des Halteelements, mit einem den Lagerbereich aufweisenden ersten Teil aus hartem Material, einem darin eingelagerten zweiten Teil aus weichem, dämpfendem Material und einem in diesem über eine durchgehende Öffnung eingelagerten, den Haltebereich aufweisenden dritten Teil aus hartem Material. Hierdurch ergibt sich der Vorteil, daß zwischen dem ersten und dem dritten Teil eine Zwischenlage aus dämpfendem Material eingesetzt ist, so daß die durch die eingebetteten rohrförmigen Teile auftretenden Schwingungen nicht auf den Träger übertragen werden.

Das Halteelement kann mit beidseitig des Haltebereichs angeordneten Lagerbereichen versehen sein, wobei der erste Teil zwischen den beiden Lagerbereichen eine mit Abschlußflanschen versehene Aussparung zur Aufnahme des zweiten Teils aufweist. Das zweite Teil kann beispielsweise mechanisch eingesetzt oder im Zweikomponenten-Spritzverfahren in das erste Teil eingebracht werden. Die Aussparung 10 weist hierbei mindestens zwei einander gegenüberliegende, keilförmig zulaufende Flächen auf, welche ober- und unterseitig durch die Abschlußflansche begrenzt sind. Hierdurch ist eine einwandfreie Einbettung des zweiten Teils in dem ersten Teil gewährleistet.

Die durchgehende Öffnung des zweiten Teils kann symmetrisch zu den Lagerbereichen liegen und beispielsweise zylindrisch ausgebildet sein. Um das dritte Teil innerhalb dieser Öffnung abzustützen, können beispielsweise ein oder mehrere Stege in der Innenwandung der zylindrischen Öffnung vorgesehen sein.

In weiterer Ausgestaltung der Erfindung kann der Haltebereich des dritten Teils als profilierte Bolzenaufnahmeöffnung, als Clipelement oder als Profilbolzen ausgebildet sein.

Die Erfindung wird nachfolgend anhand eines in der Zeichnung dargestellten Ausführungsbeispiels näher beschrieben. In der Zeichnung zeigen:
- Fig. 1: eine Seitenansicht des Halteelements
- Fig. 2: eine Unteransicht auf das Halteelement nach Fig. 1
- Fig. 3: einen Schnitt nach der Linie III/III nach Fig. 2

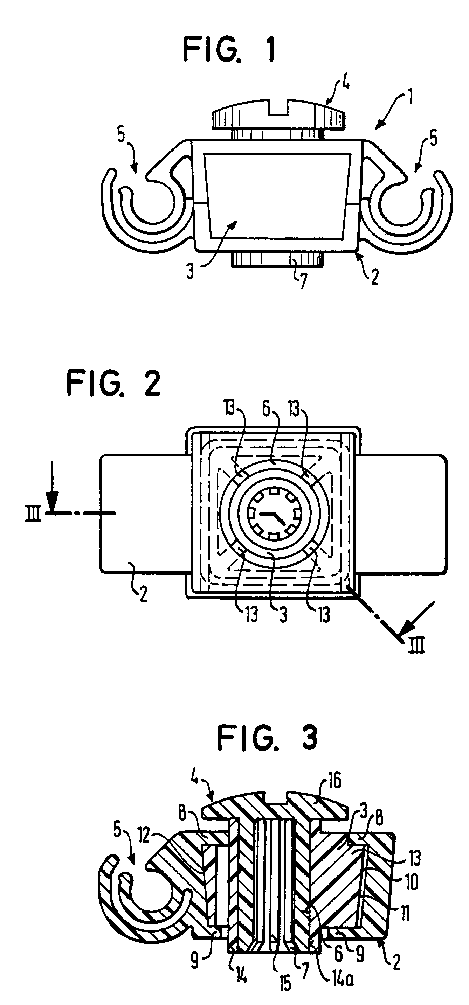

Das in Fig. 1 bis 3 dargestellte Halteelement 1 aus Kunststoff besteht aus drei Teilen, nämlich einem ersten Teil 2 aus hartem Material, welches bei dem vorliegenden Ausführungsbeispiel zwei Lagerbereiche 5 aufweist, einem zweiten Teil 3 aus weichem, dämpfenden Material und einem dritten Teil 4 aus hartem Material. Das dritte Teil 4 ist hierbei über eine durchgehende Öffnung 6 in dem zweiten Teil 3 eingelagert und weist einen Haltebereich 7 auf, welcher zwischen den beiden Lagerbereichen 5 des ersten Teils 2 angeordnet ist.

Der erste Teil 2 weist hierbei zwischen den beiden Lagerbereichen 5 eine Aussparung 10 auf, welche in etwa eine eckige Konfiguration aufweisen kann. Diese Aussparung 10 dient zur Aufnahme des zweiten Teils 3, wobei im oberen und unteren Bereich Abschlußflansche 8 und 9 vorgesehen sind, welche gewährleisten, daß nach Fig. 3 das zweite Teil 3 nicht in unerwünschter Weise aus dem ersten Teil 2 herausgleiten kann.

Zur weiteren besseren Befestigung des zweiten Teils 3 im ersten Teil 2 weist die Aussparung 10 nach Fig. 3 mindestens zwei einander gegenüberliegende, keilförmig zulaufende Flächen 11 und 12 auf, welche ober- und unterseitig durch die Abschlußflansche 8 und 9 begrenzt sind. Durch diese Keilform ergibt sich im Zusammenwirken mit den Abschlußflanschen eine sehr gute Halterung des zweiten Teils 3 im ersten Teil 2.

Das zweite Teil weist die durchgehende Öffnung 6 auf, welche symmetrisch zu den Lagerbereichen 5 nach Fig. 3 liegt. Diese durchgehende Öffnung 6 ist zylindrisch ausgebildet und kann nach Fig. 2 längsverlaufende Stege 13 aufweisen. Bei dem vorliegenden Ausführungsbeispiel sind vier derartige längsverlaufende Stege 13 über den Umfang der zylindrischen Öffnung 6 angeordnet und dienen zur Abstützung des dritten Teils 4. Durch diese Stege wird gewährleistet, daß weitere unerwünschte Schwingungen eine Dämpfung erfahren und nicht in unerwünschter Weise auf einen nicht näher dargestellten Träger übertragen werden.

Aus Fig. 3 ist weiterhin ersichtlich, daß das zweite Teil 3 im Bereich seiner Öffnung 6 an beiden Enden jeweils mit einem über das erste Teil 2 hinausragenden Bund 14 bzw. 15 versehen ist. Das dritte Teil 4 weist einen zylindrischen Außenumfang 14a auf und ist in der zylindrischen Öffnung 6 des zweiten Teils 3 eingelagert. Dieses dritte Teil 4 ist mit einem Betätigungskopf 16 versehen, welcher unterseitig gegen den Bund 15 des zweiten Teils 3 anliegt. Dieser Betätigungskopf 16 dient dazu, das beispielsweise über den Haltebereich 7 an einem nicht näher dargestellten Träger aufgebrachte Halteelement 1 über einen Schraubenzieher von einem nicht näher dargestellten Profilbolzen abzudrehen.

Bei dem Ausführungsbeispiel nach Fig. 3 ist der Haltebereich 7 des dritten Teils 4 als profilierte Bolzenaufnahmeöffnung 15 dargestellt, welche in an sich bekannter Weise längsverlaufende Rippen nach Fig. 2 und 3 besitzt. Es besteht auch die nicht näher dargestellte Möglichkeit, daß der Haltebereich 7 als Clip- element oder als Profilbolzen ausgebildet ist.

Dadurch, daß zwischen dem ersten Teil 2, welches in den Lagerbereichen 5 rohrförmige, schwingende Teile lagert und dem dritten Teil 4, welches über den Haltebereich 7 an einem Träger befestigt ist, ein aus weichem Material bestehendes zweites Teil 3 angeordnet ist, welches zudem nach Fig. 2 Abstützungsrippen 13 aufweist, ist auf einfache, aber wirkungsvolle Weise eine sehr gute Dämpfung von unerwünschten Schwingungen zwischen den rohrförmigen Teilen und dem Träger gewährleistet.

## Patentansprüche

1. Halteelement aus Kunststoff mit mindestens einem neben einem Haltebereich angeordneten Lagerbereich zur Aufnahme mindestens eines rohrförmigen Teils,
gekennzeichnet durch dreiteilige Ausbildung des Halteelements (1), mit einem den Lagerbereich (5) aufweisenden ersten Teil (2) aus hartem Material, einem darin eingelagerten zweiten Teil (3) aus weichem, dämpfendem Material und einem in diesem über eine durchgehende Öffnung (6) eingelagertem, den Haltebereich (7) aufweisenden dritten Teil (4) aus hartem Material.

2. Halteelement nach Anspruch 1, mit beidseitig des Haltebereichs angeordneten Lagerbereichen, dadurch gekennzeichnet, daß der erste Teil (2) zwischen den beiden Lagerbereichen (5) eine mit Abschlußflanschen (8, 9) versehene Aussparung (10) zur Aufnahme des zweiten Teils (3) aufweist.

3. Halteelement nach Anspruch 2, dadurch gekennzeichnet, daß die Aussparung (10) mindestens zwei einander gegenüberliegende, keilförmig zulaufende Flächen (11, 12) aufweist, welche ober- und unterseitig durch die Abschlußflansche (8, 9) begrenzt sind.

4. Halteelement nach einem der vorhergehenden Ansprüche, dadurch gekennzeichnet, daß die durchgehende Öffnung (6) des zweiten Teils (3) symmetrisch zu den Lagerbereichen (5) liegt.

5. Halteelement nach Anspruch 4, dadurch gekennzeichnet, daß die durchgehende Öffnung (6) zylindrisch ausgebildet ist.

6. Halteelement nach Anspruch 5, dadurch gekennzeichnet, daß die zylindrische Öffnung (6) mit mindestens einem längsverlaufenden Steg zur Abstützung des dritten Teils (4) versehen ist.

7. Halteelement nach Anspruch 6, dadurch gekennzeichnet, daß vier längsverlaufende Stege (13) über den Umfang der zylindrischen Öffnung (6) angeordnet sind.

8. Halteelement nach Anspruch 5 bis 7, dadurch gekennzeichnet, daß das zweite Teil (3) im Bereich seiner Öffnung (6) an beiden Enden jeweils mit einem über das erste Teil (2) ragenden Bund (14, 15) versehen ist.

9. Halteelement nach einem der vorhergehenden Ansprüche, dadurch gekennzeichnet, daß das dritte Teil (4) mit seinem zylindrischen Außenumfang (14) in der zylindrischen Öffnung (6) des zweiten Teils (3) eingelagert ist.

10. Halteelement nach Anspruch 9, dadurch gekennzeichnet, daß der Haltebereich (7) des dritten Teils (4) als profilierte Bolzenaufnahmeöffnung (15), als Clipelement oder als Profilbolzen ausgebildet ist.

11. Halteelement nach Anspruch 10, dadurch gekennzeichnet, daß das dritte Teil (4) einen Betätigungskopf (16) aufweist.

## Claims

1. Plastic retaining element having at least one bearing region, arranged beside a retaining region, for receiving at least one tubular part, characterised by a three-part design of the retaining element (1) with a first part (2) which exhibits the bearing region (5) and consists of hard material, a second part (3) which is mounted in the first part and consists of soft, damping material, and a third part (4) which is mounted in the second part via a through-opening (6), exhibits the retaining region (7) and consists of hard material.

2. Retaining element according to Claim 1, having bearing regions arranged on both sides of the retaining region, characterised in that the first part (2) exhibits, between the two bearing regions (5), a recess (10) which is provided with terminating flanges (8, 9) and is intended for receiving the second part (3).

3. Retaining element according to Claim 2, characterised in that the recess (10) exhibits at least two surfaces (11, 12) which are opposite each other, taper in a wedge shape and are delimited on the upper side and underside by the terminating flanges (8, 9).

4. Retaining element according to one of the preceding claims, characterised in that the through-opening (6) of the second part (3) is located symmetrically with respect to the bearing regions (5).

5. Retaining element according to Claim 4, characterised in that the through-opening (6) is designed in a cylindrical form.

6. Retaining element according to Claim 5, characterised in that the cylindrical opening (6) is provided with at least one longitudinally running web for supporting the third part (4).

7. Retaining element according to Claim 6, characterised in that four longitudinally running webs (13) are arranged over the circumference of the cylindrical opening (6).

8. Retaining element according to Claims 5 to 7, characterised in that, in the region of its opening (6), the second part (3) is provided at both ends with in each case a collar (14, 15) which projects beyond the first part (2).

9. Retaining element according to one of the preceding claims, characterised in that the third part (4) is mounted with its cylindrical outer circumference (14) in the cylindrical opening (6) of the second part (3).

10. Retaining element according to Claim 9, characterised in that the retaining region (7) of the third part (4) is designed as a profiled bolt-receiving opening (15), as a clip element or as a profiled bolt.

11. Retaining element according to Claim 10, characterised in that the third part (4) exhibits an actuating head (16).

## Revendications

1. Elément de retenue en matière plastique avec au moins une zone de logement disposée à proximité d'une zone de retenue destinée à recevoir au moins une pièce tubulaire,
caractérisé par la formation en trois parties de l'élément de retenue (1), avec une première partie (2) en matière dure constituant la zone de logement (5), une deuxième partie (3) en matériau absorbant mou intercalée et une troisième partie (4) en matériau dur logée dans celle-ci par l'intermédiaire d'une ouverture traversante (6) et comportant la zone de retenue (7).

2. Elément de retenue selon la revendication 1 avec des zones de logement disposées des deux côtés de la zone de retenue, caractérisé en ce que la première partie (2) comporte entre les deux zones de logement (5) un évidement (10) muni de brides de fermeture (8, 9) destiné à recevoir la deuxième partie (3).

3. Elément de retenue selon la revendication 2, caractérisé en ce que l'élément (10) comporte au moins deux surfaces (11, 12) en regard l'une de l'autre, se rapprochant en forme de coin, qui sont délimitées sur le côté supérieur et inférieur par les brides de fermeture (8, 9).

4. Elément de retenue selon l'une des revendications précédentes, caractérisé en ce que l'ouverture traversante (6) de la deuxième partie (3) s'étend symétriquement par rapport aux zones de logement (5).

5. Elément de retenue selon la revendication 4, caractérisé en ce que l'ouverture traversante (6) est conçue de façon cylindrique.

6. Elément de retenue selon la revendication 5, caractérisé en ce que l'ouverture cylindrique (6) est munie d'au moins une entretoise s'étendant longitudinalement destinée à supporter la troisième partie (4).

7. Elément de retenue selon la revendication 6, caractérisé en ce que quatre entretoises s'étendant longitudinalement (13) sont disposées sur la périphérie de l'ouverture cylindrique (6).

8. Elément de retenue selon les revendications 5 à 7, caractérisé en ce que la deuxième partie (3) est munie dans la zone de son ouverture (6) des deux côtés respectivement d'une collerette (14, 15) faisant saillie au-dessus de la première partie (2).

9. Elément de retenue selon l'une des revendications précédentes, caractérisé en ce que la troisième partie (4) est logée avec sa périphérie extérieure cylindrique (14) dans l'ouverture cylindrique (6) de la deuxième partie (3).

10. Elément de retenue selon la revendication 9, caractérisé en ce que la zone de retenue (7) de la troisième partie (4) est conçue sous forme d'ouverture de réception d'axe profilé (15) en tant qu'élément de clip ou d'axe profilé.

11. Elément de retenue selon la revendication 10, caractérisé en ce que la troisième partie (4) comporte une tête d'actionnement (16).
